# DEMANDE DE BREVET EUROPEEN

(11) **EP 4 206 028 A1**
(43) Date de publication de la demande: **05.07.2023**
(21) Numéro de dépôt: 22214084.0
(22) Date de dépôt: 16.12.2022
(51) Int. Cl.: B60L 53/12

(54) **ENSEMBLE DE CHARGE SANS CONTACT POUR BATTERIE DE CYCLE A ASSISTANCE ELECTRIQUE ET CYCLE A ASSISTANCE ELECTRIQUE**

(30) Priorité: 29.12.2021 FR 2114616
(71) Demandeur: TESC INNOVATION, 67170 Brumath (FR)
(72) Inventeur: VANAUD, Sébastien, 67170 BRUMATH (FR)
(74) Mandataire: Hege, Frédéric

(57) **Abrégé**

La présente invention concerne un dispositif de charge sans contact pour batterie d'un cycle à assistance électrique comportant :
- au moins une plaque émettrice (2) comprenant un moyen d'émission d'énergie par résonance magnétique, et
- au moins un logement (3) apte à accueillir une pédale (4) dudit cycle (2).

La présente invention concerne également un ensemble comportant un dispositif selon l'invention et un cycle (1) à assistance électrique.

La présente invention concerne enfin un procédé d'utilisation d'un dispositif selon l'invention.

## Description

La présente invention se situe dans le domaine des cycles à assistance électrique. Elle concerne plus particulièrement un dispositif de charge sans contact pour batterie de cycle à assistance électrique.

Les cycles à assistance électrique permettent à leur utilisateur de parcourir de plus longues distances que des cycles classiques. Une des contraintes principales de ces cycles est qu'il est nécessaire de veiller au niveau de charge de la batterie, car lorsque l'assistance électrique n'est pas disponible, le poids élevé de ces cycles les rend moins performants que des cycles classiques.

La plupart des cycles à assistance électrique comportent une batterie amovible, qui peut être retirée du reste du cycle pour être rechargée par exemple sur le réseau électrique du domicile de l'utilisateur. Le rayon d'action du cycle est donc limité par la capacité de la batterie, mais aussi par l'accès à un réseau électrique.

Le document WO2018220164 divulgue un système de charge de batterie de cycle par résonance magnétique. La plaque émettrice est intégrée au sol, et il suffit de disposer le cycle au-dessus, avec sa plaque réceptrice au-dessus de la plaque émettrice, pour charger la batterie. La grande distance entre les plaques émettrice et réceptrice nécessite une plaque émettrice de grandes dimensions.

Un objet de la présente invention est de proposer un dispositif de charge sans contact performant et compact.

Un autre objet de la présente invention est de proposer un dispositif compact et facile à installer dans l'espace public.

Un autre objet de la présente invention est de proposer un dispositif utilisable auquel on peut facilement adapter tout type de cycle à assistance électrique.

La présente invention a pour objet de répondre au moins en partie aux objets précités en proposant un dispositif permettant de charger un cycle sans contact, la position du cycle étant guidé par le placement d'une de ses pédales dans un logement prévu à cet effet. A cet effet, elle propose un dispositif de charge sans contact pour batterie de cycle à assistance électrique comportant :
- au moins une plaque émettrice comprenant un moyen d'émission d'énergie par résonance magnétique, et
- au moins un logement apte à accueillir une pédale dudit cycle.

Grâce à ces dispositions, la position du cycle par rapport au dispositif de charge, et donc les positions relatives de la plaque émettrice du dispositif et d'une plaque réceptrice du cycle, peut être guidée par l'insertion de la pédale dans le logement. Ceci facilite l'opération de chargement pour l'utilisateur, et réduit les chances d'un mauvais positionnement et donc d'une charge moins efficace.

Selon d'autres caractéristiques :
- la plaque émettrice peut être disposée sur un côté émetteur dudit dispositif, la plaque émettrice être délimitée du côté émetteur par une face d'émission, et ledit logement être disposé au moins en partie au-delà de ladite face d'émission vers le côté dudit dispositif opposé audit côté émetteur, ce qui permet de rapprocher au maximum le cadre du cycle, sur lequel est habituellement fixée la plaque réceptrice, du dispositif de charge, l'encombrement horizontal de la pédale étant partiellement situé dans le logement,
- ledit logement peut être débouchant sur deux faces ajacentes dudit dispositif, ce qui permet d'y faire entrer la pédale en faisant rouler le cycle,
- ledit logement peut comporter un moyen de verrouillage antivol de ladite pédale du cycle, ce qui permet de disposer la borne de charge dans l'espace public, et de laisser le cycle en charge sans surveillance et sans moyen complémentaire antivol,
- le bas de l'entrée dudit logement peut être situé à une hauteur inférieure à 30 cm, ce qui permet d'y insérer une pédale en position basse ou intermédiaire, et de dégager le cas échéant l'espace au niveau du haut du pédalier pour rapprocher la plaque émettrice du dispositif de la plaque réceptrice du cycle.

La présente invention concerne également un ensemble comportant un dispositif selon l'invention et un cycle à assistance électrique, ledit cycle comprenant une plaque réceptrice comportant un moyen de réception d'énergie par résonance magnétique et un pédalier comportant au moins une pédale, ladite au moins une pédale étant disposée au moins partiellement dans le logement.

Grâce à ces dispositions, la position du cycle par rapport au dispositif de charge, et donc les positions relatives de la plaque émettrice du dispositif et de la plaque réceptrice du cycle, est guidée par l'insertion de la pédale dans le logement. Ceci facilite l'opération de chargement pour l'utilisateur, et réduit les risques d'un mauvais positionnement et donc d'une charge moins efficace.

Selon d'autres caractéristiques :
- l'intersection des projections sur le sol du pédalier et de la plaque émettrice peuvent être non nulles, ce qui permet de rapprocher au maximum le cadre du cycle, sur lequel est habituellement fixée la plaque réceptrice, du dispositif de charge, l'encombrement horizontal de la pédale étant au moins partiellement situé dans le logement,
- ladite plaque réceptrice peut être située à moins de 30 cm au-dessus de l'axe du pédalier du cycle, ce qui permet de réduire son encombrement sur le cycle, et de disposer la plaque émettrice du dispositif à la même hauteur, la hauteur totale du dispositif pouvant ainsi être limitée,
- la distance entre ladite plaque émettrice et ladite plaque réceptrice peut être inférieure à 8 cm, ce qui permet un chargement optimal de la batterie du cycle.

La présente invention concerne enfin un procédé d'utilisation d'un dispositif selon l'invention pour charger une batterie d'un cycle à assistance électrique, comportant au moins les étapes suivantes :
- insertion au moins partielle d'une pédale dudit cycle dans ledit logement,
- le cas échéant, verrouillage de ladite pédale dans ledit logement par un moyen de verrouillage antivol situé dans ledit logement,
- émission d'énergie par résonance magnétique de la plaque émettrice vers une plaque réceptrice dudit cycle.

Grâce à ces dispositions, la position du cycle par rapport au dispositif de charge, et donc les positions relatives de la plaque émettrice du dispositif et de la plaque réceptrice du cycle, est guidée par l'insertion de la pédale dans le logement. Ceci facilite l'opération de chargement pour l'utilisateur, et réduit les chances d'un mauvais positionnement et donc d'une charge moins efficace.

La présente invention sera mieux comprise à la lecture de la description détaillée qui fait suite, en référence aux figures annexées dans lesquelles :
[Fig. 1] La fig. 1 est une vue de l'arrière d'un ensemble comportant un cycle et une borne de charge selon l'invention.
[Fig. 2] La fig. 2 est une vue en perspective de la borne de charge de la fig. 1.
[Fig. 3] La fig. 3 est une vue de côté de la borne de charge de la fig. 1.

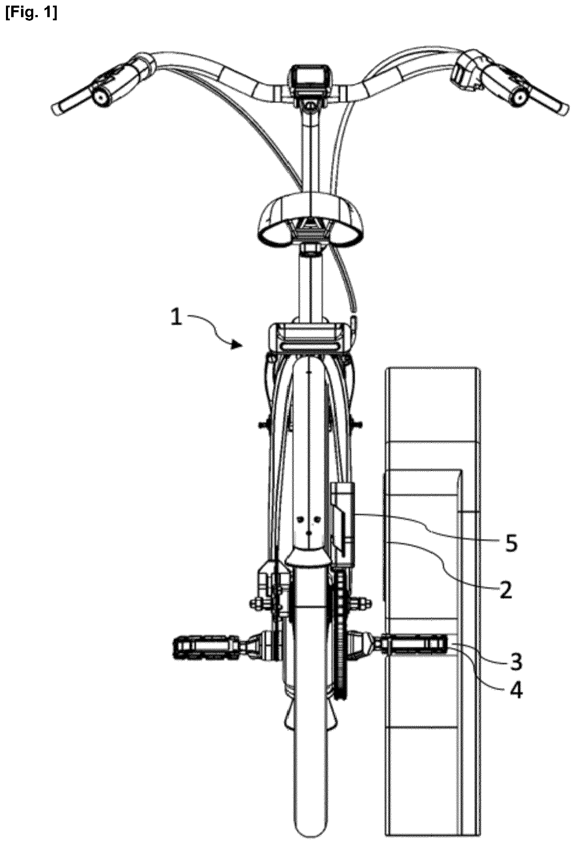

Le dispositif de charge sans contact selon l'invention, illustré aux fig. 1 à 3, est configuré pour pouvoir charger la batterie d'un cycle 1 à assistance électrique. On appelle cycle à assistance électrique un cycle qui comporte au moins deux moyens de propulsion. Le premier moyen de propulsion utilise la force humaine, et comporte un pédalier dont les pédales sont actionnées par les pieds de l'utilisateur. Le deuxième moyen de propulsion est un moteur électrique, alimenté par une batterie. Selon le choix de l'utilisateur et le niveau de charge de la batterie, le cycle à assistance électrique peut être mu soit par l'un de ses deux moyens de propulsion, soit par la combinaison des deux. Le cycle à assistance électrique le plus commun est le vélo à assistance électrique, ou VAE.

Le dispositif selon l'invention permet une charge sans contact. Pour ce faire il comporte une plaque émettrice 2 comprenant un moyen d'émission d'énergie par résonance magnétique.

Le dispositif comporte aussi un logement 3, dans lequel peut être insérée une pédale 4 d'un cycle 1 à assistance électrique. Le logement 3 permet, lors de l'insertion de la pédale 4 du cycle 1, d'assurer un positionnement optimal du cycle 1 par rapport à la plaque émettrice 2, et notamment qu'une plaque réceptrice 5 située sur le cycle 1 et comprenant un moyen de réception d'énergie par résonance magnétique puisse être en face et aussi proche que possible de la plaque émettrice 2.

Dans un mode de réalisation préféré de l'invention, le dispositif de charge comporte au moins un côté émetteur, et la plaque émettrice 2 est disposée sur le côté émetteur du dispositif de charge. Le côté émetteur peut être défini par le fait que le cycle 1 doit être placé du côté émetteur du dispositif pour que sa batterie puisse être chargée par le dispositif. Le dispositif de charge peut par exemple comporter une face verticale sur laquelle la plaque émettrice 2 est fixée ; le côté émetteur est alors le côté de cette face. La plaque émettrice 2 est délimitée du côté émetteur par une face d'émission 6. La face d'émission 6 est la face de la plaque émettrice 2 qui est disposée directement en face de la plaque réceptrice 5 pour procéder à une charge de la batterie du cycle 1. Dans ce mode de réalisation, le logement 3 est disposé au moins en partie au-delà de la face d'émission 6 vers le côté du dispositif opposé au côté émetteur. Ainsi lorsque la pédale d'un cycle 1 dont la batterie est en charge est située au moins en partie dans le logement 3, la plaque réceptrice 5, situé habituellement sur le cadre du cycle 1, peut être rapprochée de la plaque émettrice 2.

La plaque émettrice 2 est de préférence verticale. La plaque réceptrice 5 du cycle 1 est habituellement verticale lorsque le cycle est en position de déplacement, c'est-à-dire en mouvement avec ses roues au sol, ce qui permet de réduire l'encombrement de la plaque réceptrice 5. Ainsi la charge d'une batterie du cycle 1 peut se faire directement après une utilisation du cycle 1, simplement en rapprochant le cycle 1 du dispositif de charge en laissant ses roues au sol.

Le logement 3 peut être débouchant sur deux faces adjacentes du dispositif de charge. Ceci permet d'insérer la pédale 4 d'un cycle 1 en faisant rouler le cycle 1 vers le dispositif, sans avoir besoin de le déplacer dans une direction transversale à sa direction de roulage.

Le bas de l'entrée du logement 3 peut être situé à une hauteur inférieure à 50 cm par rapport au sol. Ceci permet au logement de se situer à la même hauteur que la pédale 4 d'un cycle 1 en position de déplacement, et donc d'éviter qu'il soit nécessaire de soulever le cycle 1 pour insérer la pédale 4 dans le logement 3.

Dans un mode préféré de l'invention, le bas de l'entrée du logement 3 est situé à une hauteur inférieure à 30 cm par rapport au sol. La pédale 4 peut alors être insérée dans le logement 3 lorsqu'elle est en position basse ou intermédiaire, ce qui permet de disposer la plaque réceptrice 5 à n'importe quelle hauteur au-dessus de l'axe du pédalier du cycle 1, sans que la manivelle de la pédale 4 ne soit située entre les plaques émettrice 2 et réceptrice 5. On peut par exemple disposer la plaque réceptrice 5 à une hauteur inférieure à 30 cm par rapport à l'axe du pédalier du cycle 1.

Limiter la hauteur de l'entrée du logement 3 permet en outre de réduire la hauteur totale du dispositif de charge.

Indépendamment de la hauteur du bas de l'entrée du logement 3, on peut prévoir que la hauteur du logement 3 soit inférieure à 10 cm, afin de contraindre la position de la pédale 4 par rapport au cycle lorsque la pédale 4 est insérée dans le logement 3, pour s'assurer que la charge ne soit pas perturbée par un mauvais positionnement de la pédale 4. Ceci est particulièrement pertinent lorsque le bas de l'entrée du logement 3 est situé à une hauteur inférieure à 30 cm par rapport au sol, et qu'on veut s'assurer que la manivelle de la pédale 4 ne soit pas située entre les plaques émettrice 2 et réceptrice 5.

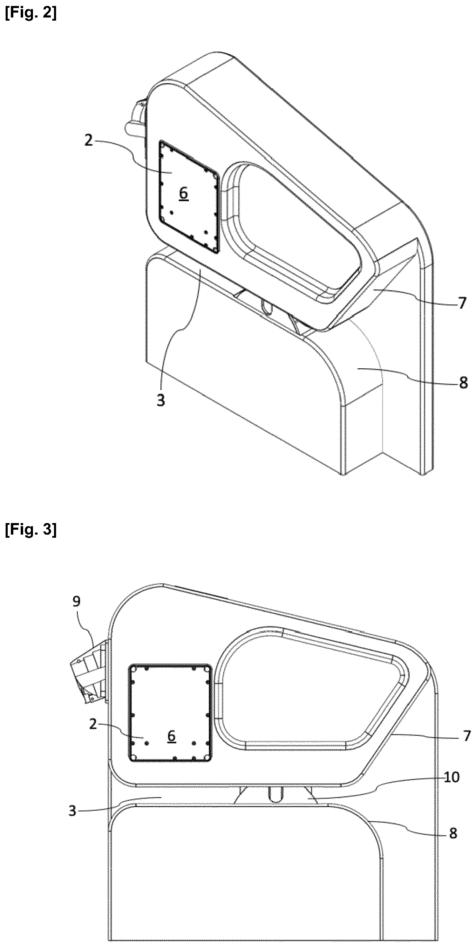

Le dispositif de charge selon l'invention comporte de préférence un guide d'entrée de la pédale 4 dans le logement 3. Comme illustré aux fig. 2 et 3, l'entrée du logement 3 peut comporter un plan incliné 7 descendant vers l'intérieur du logement 3 et prolongeant la paroi supérieure du logement 3. Le plan incliné 7 permet, lorsqu'on approche en marche avant un cycle 1 avec la pédale 4 en position haute, de faire descendre la pédale 4 jusqu'à son insertion dans le logement 3.

L'entrée du logement 3 peut également comporter un plan courbe 8 montant vers l'intérieur du logement 3 et prolongeant la paroi inférieure du logement 3. Le plan courbe 8 permet, lorsque l'on souhaite éloigner le cycle 1 du dispositif de chargement, de pouvoir faire rouler en marche arrière le cycle 1, la pédale 4 entraînée par la roue libre s'extrayant naturellement du logement 3 en descendant le long du plan courbe 8.

Le dispositif selon l'invention peut comprendre, outre la plaque émettrice 2, un moyen de chargement complémentaire 9 d'une batterie de cycle à assistance électrique. Il s'agit par exemple, comme illustré en fig. 3, d'une prise de courant 220V. Ainsi la batterie d'un cycle 1 ne comportant pas de plaque réceptrice 5 peut aussi être rechargée avec le dispositif selon l'invention.

Le dispositif selon l'invention peut prendre la forme d'une borne, par exemple une borne ayant une forme de parallélépipède rectangle, surmonté ou non d'un demi-cylindre.

Une borne peut comprendre deux dispositifs selon l'invention. Une telle borne comporte deux plaques émettrices 2, situées par exemple sur deux de ses côtés opposés, et deux logements 3, situés par exemple sur deux de ses côtés opposés. Les logements 3 peuvent être adjacents et former une ouverture unique dans la borne.

Une borne, par exemple de plus grande taille, peut encore comprendre trois dispositifs selon l'invention ou plus.

Le logement 3 comporte de préférence un moyen de positionnement. Le moyen de positionnement permet de positionner correctement la pédale 4 dans le logement 3, de façon à ce que le cycle 1 et donc la plaque réceptrice 5 soit bien positionnée par rapport à la plaque émettrice 2. Le moyen de positionnement peut être une butée pour la pédale 4. Il peut être prévu que la butée soit escamotable, et par exemple s'escamoter si l'utilisateur exerce une certaine pression pour libérer la pédale 4.

Le logement 3 peut encore comporter un moyen de verrouillage 10 antivol, permettant de verrouiller la pédale 4 du cycle 1 en position dans le logement 3, et de s'assurer qu'une personne non autorisée ne puisse l'en sortir, et donc déplacer le cycle 1. Le moyen de verrouillage 10 peut par exemple exercer une action de blocage mécanique, en bloquant la pédale 4 entre deux éléments exerçant une pression vers la pédale 4. Le blocage peut par exemple être commandé par un poussoir, activé par la pédale 4 lors de son insertion dans le logement 3. Le verrouillage par exemple être réalisé par une gâche magnétique. Le verrouillage est de préférence activé ou désactivé par une commande connectée, communiquant par exemple avec le smartphone de l'utilisateur. Ainsi l'utilisateur du cycle 1 peut le laisser pour charger sa batterie, sur un dispositif situé dans l'espace public, sans avoir besoin d'utiliser un moyen antivol classique tel qu'un cadenas de vélo. Alternativement il peut utiliser un moyen antivol classique et activer le moyen de verrouillage du dispositif, la combinaison des deux permettant de réduire les risques de vols.

Dans un mode particulier de l'invention, le dispositif comportant un logement 3 et un moyen de verrouillage 10 antivol ne comporte pas de plaque émettrice 2. Le dispositif peut alors être utilisé pour disposer un cycle 1 de manière à empêcher qu'il soit volé.

La présente invention concerne aussi un ensemble comportant un dispositif de charge selon l'invention et un cycle 1 à assistance électrique. Le cycle 1 comporte une plaque réceptrice 5 comprenant un moyen de réception d'énergie par résonance magnétique, et un pédalier comportant au moins une pédale 4. La pédale 4 du cycle 1 est disposée au moins partiellement dans le logement 3 du dispositif. De préférence, l'intersection des projections sur le sol du pédalier et de la plaque émettrice 2 du dispositif est non nulle. Ainsi si la plaque réceptrice 5 est située sur le cadre du cycle 1, ou proche du cadre, elle peut être rapprochée au plus proche de la plaque émettrice 2, l'encombrement horizontal de la pédale 4 étant repris au moins partiellement par le logement 3.

La distance maximale entre les plaques émettrice 2 et réceptrice 5 est par exemple de 8 cm, ce qui permet un chargement efficace de la batterie du cycle 1.

La présente invention concerne enfin un procédé d'utilisation d'un dispositif selon l'invention pour charger une batterie d'un cycle 1 à assistance électrique, comportant au moins les étapes suivantes :
- insertion au moins partielle d'une pédale 4 du cycle 1 dans le logement 3 du dispositif,
- le cas échéant, verrouillage de la pédale 4 dans le logement 3 au moins par un moyen de verrouillage antivol situé dans le logement 3,
- émission d'énergie par résonance magnétique de la plaque émettrice 2 vers une plaque réceptrice 5 dudit cycle 1.

L'invention permet de charger la batterie d'un cycle 1, sans sortir la batterie de son emplacement dans le cycle 1, en positionnant très facilement le cycle 1 par rapport au dispositif de charge.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Ensemble comportant :
- un dispositif de charge sans contact pour batterie d'un cycle à assistance électrique, comportant au moins une plaque émettrice (2) comprenant un moyen d'émission d'énergie par résonance magnétique, et au moins un logement (3) apte à accueillir une pédale (4) dudit cycle (2), et
- un cycle (1) à assistance électrique, ledit cycle (1) comprenant une plaque réceptrice (5) comportant un moyen de réception d'énergie par résonance magnétique et un pédalier comportant au moins une pédale (4), ladite au moins une pédale (4) étant disposée au moins partiellement dans le logement (3).

2. Ensemble selon la revendication précédente dans lequel la plaque émettrice (2) est disposée sur un côté émetteur dudit dispositif, la plaque émettrice (2) est délimitée du côté émetteur par une face d'émission (6), et ledit logement (3) est disposé au moins en partie au-delà de ladite face d'émission (6) vers le côté dudit dispositif opposé audit côté émetteur.

3. Ensemble selon l'une des revendications précédentes dans lequel ledit logement (3) est débouchant sur deux faces ajacentes dudit dispositif.

4. Ensemble selon l'une des revendications précédentes dans lequel ledit logement (3) comporte un moyen de verrouillage (10) antivol de ladite pédale (4) du cycle (1).

5. Ensemble selon l'une des revendications précédentes dans lequel le bas de l'entrée dudit logement (3) est situé à une hauteur inférieure à 30 cm.

6. Ensemble selon la revendication précédente, dans lequel l'intersection des projections sur le sol du pédalier et de la plaque émettrice (2) est non nulle.

7. Ensemble selon l'une des revendications 6 à 7, dans lequel ladite plaque réceptrice (2) est située à moins de 30 cm au-dessus de l'axe du pédalier du cycle (1).

8. Ensemble selon l'une des revendications 6 à 8, dans lequel la distance entre ladite plaque émettrice (2) et ladite plaque réceptrice (5) est inférieure à 8 cm.

9. Procédé d'utilisation d'un dispositif selon l'une des revendications 1 à 5 pour charger une batterie d'un cycle (1) à assistance électrique, comportant au moins les étapes suivantes :
- insertion au moins partielle d'une pédale (4) dudit cycle (1) dans ledit logement (3),
- le cas échéant, verrouillage de ladite pédale (4) dans ledit logement (3) par un moyen de verrouillage antivol situé dans ledit logement (3),
- émission d'énergie par résonance magnétique de la plaque émettrice (2) vers une plaque réceptrice (5) dudit cycle.
